# EUROPÄISCHE PATENTSCHRIFT

(11) **EP 0 649 738 B1**
(45) Veröffentlichungstag und Bekanntmachung des Hinweises auf die Patenterteilung: **29.04.1998**
(21) Anmeldenummer: 94100429.3
(22) Anmeldetag: 13.01.1994
(51) Int. Cl.: B32B 27/34, B32B 1/08, F16L 11/04, C08L 77/00, C08L 33/24

(54) **Thermoplastische Mehrschichtverbunde**
Thermoplastic laminate
Stratifié thermoplastique

(30) Priorität: 25.10.1993 DE 4336291
(43) Veröffentlichungstag der Anmeldung: 26.04.1995
(73) Patentinhaber: HÜLS AKTIENGESELLSCHAFT, 45764 Marl (DE)
(72) Erfinder: Röber, Stefan, Dr., D-45772 Marl (DE); Feinauer, Roland, Dr., D-45770 Marl (DE); Jadamus, Hans, Dr., D-45768 Marl (DE)

(56) Entgegenhaltungen:
- EP-A- 0 094 215
- EP-A- 0 404 346
- EP-A- 0 456 267
- EP-A- 0 464 561
- EP-A- 0 523 644
- EP-A- 0 551 094
- EP-A- 0 558 373
- EP-A- 0 559 445
- WO-A-93/02138
- US-A- 4 415 706
- RESEARCH DISCLOSURE Nr. 320 , Dezember 1990 , EMSWORTH, GB Seiten 956 - 957 'Enhancements of properties of polyglutarimides when compounded with small amounts of polyamides'
- RESEARCH DISCLOSURE Nr. 321 , Januar 1991 , EMSWORTH , GB Seiten 68A - 68B 'Control of functionality in glutarimide polymers'
- DATABASE WPI Week 9239, Derwent Publications Ltd., London, GB; AN 92-320278 & JP-A-4 224 939 (TOKAI RUBBER IND. LTD.)

## Beschreibung

Gegenstand der Erfindung sind thermoplastische Mehrschichtverbunde.

Polyamide bzw. Polyvinylidenfluorid sind für eine Reihe von Anwendungen ungeeignet.

Polyamide sind beispielsweise nicht witterungsbeständig, da sie unter Belichtung altern sowie Luftfeuchtigkeit aufnehmen. Dies führt zu Verfärbungen, Verschlechterung der mechanischen Eigenschaften und Verzugserscheinungen. Obwohl Polyamide grundsätzlich gute mechanische Eigenschaften, insbesondere gute Zähigkeit, aufweisen, haben sie eine schlechte Sperrwirkung; so können polare Substanzen leicht durch Polyamide migrieren. Dies ist beispielsweise bei Kraftstoffleitungen, in denen alkoholhaltiger Kraftstoff gefördert wird, äußerst nachteilig.

Polyvinylidenfluorid ist im allgemeinen gut witterungsbeständig, besitzt eine gute Chemikalienbeständigkeit und kann einfach lackiert werden. Darüber hinaus besitzt Polyvinylidenfluorid eine ausgezeichnete Sperrwirkung sowohl gegenüber polaren als auch unpolaren Medien. Nachteilig ist die Schlagempfindlichkeit; insbesondere die Kerbschlagzähigkeit ist nicht ausreichend.

Es ist dem Fachmann bekannt, daß die weitaus meisten Polymeren, so auch Polyamid und Polyvinylidenfluorid, miteinander unverträglich sind, weshalb bei der Herstellung von Mehrschichtverbunden keine ausreichende Haftung zwischen den Laminatschichten erzielt wird. Ein kraftschlüssiger Verbund ist aber bei technischen Anwendungen unbedingt erforderlich.

In FR-PS 2 602 515 wird ein zweischichtiges Rohr mit einer Außenschicht aus Polyamid 11 und einer inneren Schicht aus weichgemachtem Polyvinylidenfluorid beschrieben. Eine kraftschlüssige Verbindung der Schichten liegt hierbei nicht vor.

EP-A-0523644 und EP-A-0559445 definieren krafstoffresistente, mehrschichtige Kunststoffrohre mit einer äußeren Lage aus Polyamid und einer inneren Lage aus Fluorkunststoff. Die Adhäsion zwischen Polyamid und dem Fluorkunststoff wird in EP-A-0523644 durch eine Zwischenschicht einer Mischung aus Polyamid und einem Fluor enthaltenden elastomeren Pfropfpolymer gewährleistet und in EP-A-0559445 durch Koronabehandlung des Fluorpolymers und anschließenden Auftrag einer Epoxy-Klebstoffschicht erreicht.

In FR 2 577 564 werden Verbundwerkstoffe aus u. a. Polyamiden und Mischungen von Polyvinylidenfluorid und Carbonylgruppen-haltigen Polymeren beschrieben, die auch durch Coextrusion hergestellt werden können.

Aufgabe der vorliegenden Erfindung war es, einen lösemittel- und temperaturbeständigen Verbund zwischen Polyamid und Polyvinylidenfluorid zu schaffen, der unempfindlich gegenüber Scherbeanspruchung ist und gute mechanische Eigenschaften besitzt. Insbesondere soll eine sehr gute Schichtenhaftung erzielt werden.

Diese Aufgabe wird gelöst durch einen thermoplastischen Mehrschichtverbund enthaltend mindestens
I. eine Schicht aus einer Formmasse auf Basis von Polyvinylidenfluorid,
II. einer zweiten zur Schicht gemäß I. benachbarten Schicht aus einer Formmasse auf Basis eines Gemisches aus
   a. Polyamid
      und
   b. Polyglutarimid,
wobei die beiden Schichten kraftschlüssig miteinander verbunden sind.

Die Schicht gemäß I. enthält insbesondere Polyvinylidenfluorid, welches bevorzugt weichmacherfrei eingesetzt wird. Herstellung und Struktur des Polymeren sind bekannt. (Hans R. Kricheldorf, **Handbook of Polymer Synthesis**, Part A, Verlag Marcel Dekker Inc. New York - Basel - Hongkong, S. 191 f.; **Kunststoff Handbuch**, 1. Auflage, Band XI, Carl Hanser Verlag München (1971), S. 403 ff.).

Es können auch Polymere auf Basis von Polyvinylidenfluorid erfindungsgemäß enthalten sein, die bis zu 40 Gew.-% andere Monomere aufweisen. Als solche zusätzlichen Monomeren seien beispielhaft genannt: Trifluorethylen, Ethylen, Propen und Hexafluorpropen.

Das eingesetzte erfindungsgemäße Polyvinylidenfluorid weist in der Regel einen Melt Flow-Index von < 17 g/10 min., vorzugsweise von 2 bis 13 g/10 min. (DIN 53 735) auf.

Eine bevorzugte Ausführungsform ist eine Schicht gemäß I., die elektrisch leitfähig (Oberflächenwiderstand < 10⁹ Ω) eingestellt ist. Die gute elektrische Leitfähigkeit wird durch Zugabe von bis zu 15 Gew.-% von z. B. Leitfähigkeitsruß, Kohlenstoffasern o. ä. erreicht.

Für die Komponente II.a. kommen in erster Linie aliphatische Homo- und Copolyamide in Frage. Als Beispiel seien die 4.6-; 6.6-; 6.12-; 8.10-; 10.10-Polyamide o. ä. genannt. Bevorzugt werden 6-; 10.12-; 11-; 12.12- sowie insbesondere 12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleitetem Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatisch/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Wiley & Sons (1982), S. 328 und 435, beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität (ηᵣₑₗ) im Bereich von 1,65 bis 2,4.

Bevorzugt sind Polyamide, die ≤ 50 % Aminoendgruppen, insbesondere < 20 % Aminoendgruppen, enthalten.

Die Polyamide der Komponente II.a., können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates**, Interscience Publishers, New York (1981)], Acrylnitril/Styrol/Butadien- (Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat- (**Ullmanns Encyclopädie der technischen Chemie**, 4. Auflage, Bd. 19, Verlag Chemie Weinheim (1981), S. 277 - 295), Acrylnitril/Styrol-Copolymerisate (**Ullmanns Encyclopädie der technischen Chemie**, 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide schlagzäh eingestellt werden. Geeignete Modifier sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Neben Polyamid als Komponente II.a. enthält die Schicht gemäß II. noch die Komponente II.b. Als Komponente II.b. werden Polyglutarimide eingesetzt, welche nachstehende Grundbausteine aufweisen:
i) < 100 Gew.-%, vorzugsweise
   10 bis 60 Gew.-% 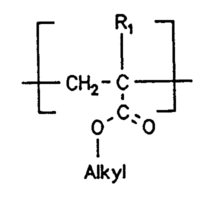
ii) < 100 Gew.-%, vorzugsweise
   30 bis 80 Gew.-% 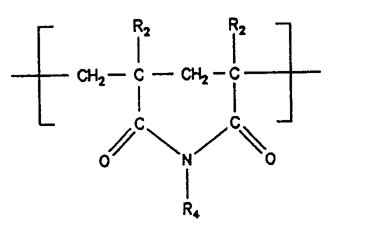
iii) < 20 Gew-%, vorzugsweise
   2 bis 10 Gew.-% 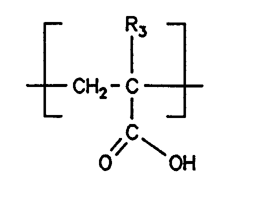
iv) 1,2 bis 20 Gew.-%, vorzugsweise
   1,5 bis 12 Gew.-%, insbesondere
   bevorzugt 2 bis 10 Gew.-%

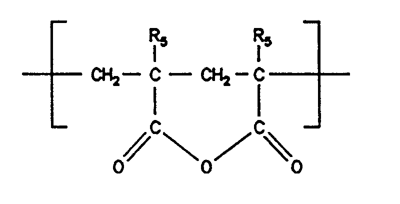

In den genannten Formeln bedeuten
Alkyl = Methyl, Ethyl, Propyl, Butyl, Hexyl
R₁ bis R₅ = -H, -(CₙH₂ₙ₊₁)
n = 1 bis 6,
wobei die Substituenten gleich oder verschieden sein können. Bevorzugt sind solche Grundbausteine, in denen Alkyl und R₁ bis R₅ einen Methylrest bedeuten.

Die genannten Polymeren der Komponente II.b. werden deswegen als Polyglutarimide bezeichnet, weil es sich um Poly(alkyl)acrylsäureester handelt, bei denen zwei benachbarte Carboxylatgruppen zu einem cyclischen Säureimid umgesetzt worden sind. Die Imidbildung wird bevorzugt mit Ammoniak bzw. primären Aminen, wie z. B. mit Methylamin, durchgeführt. Die Produkte sowie ihre Herstellung sind bekannt (Hans R. Kricheldorf, **Handbook of** **Polymer Synthesis**, Part A, Verlag Marcel Dekker Inc. New York - Basel - Hongkong, S. 223 f.; H. G. Elias, **Makromoleküle**, Hüthig und Wepf Verlag Basel - Heidelberg - New York; US-PSS 2 146 209, 4 246 374).

Die erfindungsgemäß eingesetzten Polyglutarimide weisen in der Regel einen Melt Flow-Index von < 30 g/10 min., vorzugsweise von 0,3 bis 15 g/10 min., auf.

Zur Erhöhung der Kälteschlagzähigkeit können die Polyglutarimide noch entsprechende Modifier enthalten. Als Beispiel seien Kern/Schale-Polymere mit einem Polybutylacrylatkern und einer Schale aus Polymethylmethacrylat und/oder Polyglutarimid genannt. Außer den genannten Beispielen sind weitere Modifier möglich.

Die Herstellung der Formmasse für die Schicht gemäß II. erfolgt nach üblichen und bekannten Verfahren durch Schmelzemischen der Komponenten II.a. und II.b. in einem gut knetenden Mischaggregat, wie z. B. einem Doppelschneckenkneter, bei Temperaturen, die sich nach den Schmelzpunkten der Komponenten II.a. und II.b. richten, im allgemeinen bei Temperaturen zwischen 230 und 330 °C.

Die Herstellung der Formmasse für die Schicht gemäß II. kann auch direkt in einem Speiseextruder, der zur Herstellung des thermoplastischen Mehrschichtverbunds in der verwendeten Coextrusionsanlage oder Spritzgußanlage eingesetzt ist, erfolgen, so daß die Formmasse für die Schicht gemäß II. direkt im Anschluß an ihre Herstellung - ohne weitere Zwischenlagerung - zu einer Schicht des thermoplastischen Mehrschichtverbunds verarbeitet werden kann.

Die Komponenten II.a. und II.b. werden im Gewichtsverhältnis 40 bis 90 : 60 bis 10, vorzugsweise 60 bis 80 : 40 bis 20, eingesetzt.

Neben den erfindungsgemäßen Schichten gemäß I. und II. können die thermoplastischen Mehrschichtverbunde eine weitere Schicht III. aufweisen. Diese ist zur Schicht gemäß II. benachbart und zwar gegenüberliegend bezogen auf die Schicht gemäß I. angeordnet. Die Schicht gemäß III. ist ebenfalls mit der Schicht gemäß II. kraftschlüssig verbunden.

Den Formmassen für die Schichten gemäß I. bis III. können übliche Hilfs-und Zusatzstoffe wie z. B. Flammschutzmittel, Stabilisatoren, Weichmacher, Verarbeitungshilfsmittel, Viskositätsverbesserer, Füllstoffe, hier insbesondere solche zur Verbesserung der Leitfähigkeit, Pigmente o. ä. zugefügt werden. Die Menge der genannten Mittel ist so zu dosieren, daß die gewünschten Eigenschaften nicht ernsthaft beeinflußt werden.

Die Herstellung der thermoplastischen Mehrschichtverbunde kann ein- oder mehrstufig erfolgen.

Bei einem einstufigen Extrusionsverfahren werden in üblicher Weise die verschiedenen Schmelzen coextrudiert. Beim einstufigen Spritzgießverfahren bringt man die verschiedenen Schmelzen in einer Form zusammen und läßt das Formteil erkalten (Mehrkomponentenspritzguß).

Bei einem mehrstufigen Verfahren wird zunächst ein Formteil aus einer der Komponenten I., II. oder ggf. III. hergestellt und dann mit den übrigen Komponenten durch Pressen, Spritzgießen oder Extrudieren verbunden.

Die erfindungsgemäßen thermoplastischen Mehrschichtverbunde weisen in hervorragendem Maße eine gute Beständigkeit sowie Sperrwirkung gegen Diffusion gegenüber chemischen Agenzien, Lösemitteln und Kraftstoffen auf. Ferner sind die Schichten kraftschlüssig miteinander verbunden, so daß z. B. bei thermischer Ausdehnung oder Biegen des Fertigteils kein Abscheren der verschiedenen Schichten voneinander auftritt. Ferner ist es auch möglich, Teile herzustellen, welche die erfindungsgemäßen Mehrschichtverbunde mehrfach übereinander (alternierend) enthalten.

Die erfindungsgemäßen Mehrschichtverbunde finden bei Konstruktionsteilen vor allem im Bereich der Elektro-, Maschinenbau- und Automobilindustrie dort Verwendung, wo die Sperrrwirkung des Polyvinylidenfluorids mit den guten mechanischen Eigenschaften des Polyamids, insbesondere der sehr guten Kälteschlagzähigkeit kombiniert werden soll oder wo die nachteiligen Eigenschaften des Polyamids wie mangelnde UV-Beständigkeit, nicht ausreichende Kratzfestigkeit oder mangelnde chemische Beständigkeit durch eine Beschichtung mit Polyvinylidenfluorid ausgeglichen werden soll.

Die genannten Parameter wurden mit Hilfe nachstehender Meßverfahren bestimmt.

Die **Bestimmung des Melt Flow-Index der Polyglutarimide** erfolgt bei 230 °C und unter einer Belastung von 3,8 kg (DIN 53 735).

Die **Bestimmung des Melt Flow-Index der Polyvinylidenfluoride** erfolgt bei 230 °C und unter einer Belastung von 5 kg (DIN 53 735).

Die **Bestimmung der Lösungsviskosität** (rel. Viskosität ηᵣₑₗ) **der Polyamide** erfolgt unter Verwendung einer 0,5 gew.-%igen m-Kresol-Lösung bei 25 °C gemäß DIN 53 727/ISO 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen** in den Polyamiden wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/1) gegen Phenolphthalein bis zum Farbumschlag titriert.

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Mit Buchstaben gekennzeichnete Beispiele sind nicht erfindungsgemäß.-

### Beispiele

### A. Komponente I.

- **PVDF 1:**: Polyvinylidenfluorid (Melt Flow-Index: 13 g/10 min., DYFLOR® LE - HÜLS AG)
- **PVDF 2:**: Polyvinylidenfluorid (Melt Flow-Index: 8,5 g/10 min., DYFLOR® EE - HÜLS AG)
- **PVDF 3:**: Polyvinylidenfluorid (Melt Flow-Index: 8,5 g/10 min.; 6 Gew.-Tl. handelsüblicher Leitfähigkeitsruß (KETJEN BLACK™ EG 300 - AKZO) auf 100 Gew.-Tl. PVDF; DYFLOR® EE - HÜLS AG)

### B. Komponente II.

Die Polyglutarimide bestehen aus den in Anspruch 7 als i) bis iv) bezeichneten Grundbausteinen, wobei Alkyl und R₁ bis R₅ eine Methylgruppe darstellen.

Die Mischungen für die Komponente II. werden in einem Doppelschneckenkneter bei einer Massetemperatur von 280 °C hergestellt.

Zusammensetzung der in den Beispielen eingesetzten Polyglutarimide:

| | Menge | Polyglutarimid | | Melt Flow-Index [g/10 min.] Polyglutarimid | |
|---|---|---|---|---|---|
| | | A | B | A | B |
| i) | Gew.-% | 18 | 57 | | |
| ii) | Gew.-% | 77 | 30 | | |
| iii) | Gew.-% | 3 | 3 | 0,4 | 0,4 |
| iv) | Gew.-% | 2 | 10 | | |

### Z 1: Mischung aus

a. 50 Gew.-Tl. Polyamid 12 (ηᵣₑₗ: 2,1; Weichmachergehalt: 0; Aminoendgruppen: 9 mmol/kg; Carboxylendgruppen: 48 mmol/kg; VESTAMID® L 2140, HÜLS AG)
   und
b. 50 Gew.-Tl. Polyglutarimid A

### Z 2: Mischung aus

a. 70 Gew.-Tl. Polyamid 12 (ηᵣₑₗ: 2,1; Weichmachergehalt: 0; Aminoendgruppen: 9 mmol/kg; Carboxylendgruppen: 48 mmol/kg; VESTAMID® L 2140 - HÜLS AG)
   und
b. 30 Gew.-Tl. Polyglutarimid A

### Z 3: Mischung aus

a. 70 Gew.-Tl. Polyamid 12 (ηᵣₑₗ: 1,8; Weichmachergehalt: 0; Aminoendgruppen: 5 mmol/kg; Carboxylendgruppen: 73 mmol/kg; VESTAMID® L 1801 - Hüls AG)
   und
b. 30 Gew.-Tl. Polyglutarimid B

### Z 4: Mischung aus

a. 60 Gew.-Tl. Polyamid 12 (ηᵣₑₗ: 2,1; Weichmachergehalt auf 100 Gew.-Tl. Polyamid: 15 Gew.-Tl. N-n-Butylbenzolsulfonamid; Aminoendgruppen: 9 mmol/kg; Carboxylendgruppen: 48 mmol/kg; VESTAMID® L 2124 - Hüls AG)
   und
b. 40 Gew.-Tl. Polyglutarimid A

### Z 5: Mischung aus

a. 80 Gew.-Tl. Polyamid 12 (ηᵣₑₗ: 2,1; Weichmachergehalt auf 100 Gew.-Tl. Polyamid: 15 Gew.-Tl. N-n-Butylbenzolsulfonamid; Aminoendgruppen: 9 mmol/kg; Carboxylendgruppen: 48 mmol/kg; VESTAMID® L 2124 - Hüls AG)
   und
b. 20 Gew.-Tl. Polyglutarimid B

### C. Komponente III.

- **PA 1:**: Polyamid 12 (ηᵣₑₗ: 2,1; Weichmachergehalt: 0; Aminoendgruppengehalt: 9 mmol/kg; Carboxylendgruppengehalt: 48 mmol/kg; VESTAMID® L 2140 - HÜLS AG)
- **PA 2:**: Polyamid 12 (ηᵣₑₗ: 2,1; Weichmachergehalt auf 100 Gew.-Tl. Polyamid: 15 Gew.-Tl. N-n-Butylbenzolsulfonamid; Aminoendgruppengehalt: 9 mmol/kg; Carboxylendgruppengehalt: 48 mmol/kg; VESTAMID® L 2124 - HÜLS AG)

### D. Herstellung der thermoplastischen Mehrschichtverbunde

Es wurden sowohl zweischichtige Folien als auch zwei- und dreischichtige Preßplatten hergestellt.

Die Herstellung der zweischichtigen Folien erfolgte in einer Labor-Coextrusionsanlage, deren zwei Speiseextruder Schneckendurchmesser von 25 mm bzw. 30 mm aufweisen. Die Zylindertemperaturen lagen bei 230 °C (PA 1, PA 2), 250 °C (PVDF 1, PVDF 2, PVDF 3), 260 °C (Z 2, Z 3, Z 4, Z 5) und 280 °C (Z 1). Die Schichtdicke betrug jeweils 0,5 mm in der einzelnen Schicht, d. h. die Verbundfolie hatte insgesamt eine Stärke von 1 mm.

Die Herstellung der Preßplatten erfolgte in einer Laborpresse bei 270 °C und mit einer Preßzeit von 5 min. Die Schichtdicke betrug jeweils 1 mm, d. h. die zweischichtige Preßplatte hatte insgesamt eine Stärke von 2 mm, die dreischichtige Preßplatte entsprechend eine Stärke von 3 mm.

### E.

**Tabelle A**

| **Zweischichtige Folien und Preßplatten** | | | | | | | | |
|---|---|---|---|---|---|---|---|---|
| Versuch Nr. | Komponente | | | an der Grenzfläche mechanisch trennbar | | | | |
| | I. | II. | III. | Zweischichtfolie nach Lagerung | | | Preßplatte nach Lagerung | |
| | | | | bei 23 °C | in M 15*⁾ | bei 150 °C | bei 23 °C | in M 15*⁾ |
| A | PVDF 1 | - | PA 1 | ja | ja | ja | ja | ja |
| B | PVDF 1 | - | PA 2 | ja | ja | ja | ja | ja |
| C | PVDF 2 | - | PA 1 | ja | ja | ja | ja | ja |
| 1 | PVDF 1 | Z 1 | - | nein | nein | nein | nein | nein |
| 2 | PVDF 1 | Z 2 | - | nein | nein | nein | nein | nein |
| 3 | PVDF 2 | Z 3 | - | nein | nein | nein | nein | nein |
| 4 | PVDF 1 | Z 4 | - | nein | nein | nein | nein | nein |
| 5 | PVDF 3 | Z 5 | - | nein | nein | nein | nein | nein |

| | | | | | | | | |
|---|---|---|---|---|---|---|---|---|
| *⁾ Lagerung bei 23 °C während 5 Tagen in Normkraftstoff M 15 (42,5 Vol.-% Isooctan, 42,5 Vol.-% Toluol und 15 Vol.-% Methanol) | | | | | | | | |

**Tabelle B**

| Versuch Nr. | Preßplatte aus 3 Schichten: | | | | |
|---|---|---|---|---|---|
| | Schichtfolge | | | an der Grenzfläche mechanisch trennbar nach Lagerung in M 15*⁾ | |
| | I. | II. | III. | Schicht I. und II. | Schicht II. und III. |
| 6 | PVDF 1 | Z 3 | PA 2 | nein | nein |

| | | | | | |
|---|---|---|---|---|---|
| *⁾ Lagerung bei 23 °C während 5 Tagen in Normkraftstoff M 15 (42,5 Vol.-% Isooctan, 42,5 Vol.-% Toluol und 15 Vol.-% Methanol) | | | | | |

## Patentansprüche

1. Thermoplastischer Mehrschichtverbund enthaltend mindestens
I. eine Schicht aus einer Formmasse auf Basis von Polyvinylidenfluorid,
II. einer zweiten zur Schicht gemäß I. benachbarten Schicht aus einer Formmasse auf Basis eines Gemisches aus
a. Polyamid
und
b. Polyglutarimid,
wobei die beiden Schichten ohne Aktivieren oder Kleben kraftschlüssig direkt miteinander verbunden sind.

2. Thermoplastischer Mehrschichtverbund nach Anspruch 1,
dadurch gekennzeichnet,
daß die Schicht gemäß I. eine Formmasse auf Basis eines Polyvinylidenfluorids mit einem Melt Flow-Index von < 17 g/10 min. enthält.

3. Thermoplastischer Mehrschichtverbund nach den Ansprüchen 1 und 2,
dadurch gekennzeichnet,
daß die Schicht gemäß I. eine Formmasse auf Basis eines Polyvinylidenfluorids mit einem Melt Flow-Index von 2 bis 13 g/10 min. enthält.

4. Thermoplastischer Mehrschichtverbund nach den Ansprüchen 1 bis 3,
dadurch gekennzeichnet,
daß die Schicht gemäß I. eine Formmasse auf Basis eines Polyvinylidenfluoridcopolymeren enthält.

5. Thermoplastischer Mehrschichtverbund nach den Ansprüchen 1 bis 4, dadurch gekennzeichnet,
daß die Schicht gemäß II. eine Formmasse auf Basis eines Gemisches aus
a. 40 bis 90 Gew.-% eines Polyamids
und
b. 10 bis 60 Gew.-% eines Polyglutarimids
enthält.

6. Thermoplastischer Mehrschichtverbund nach den Ansprüchen 1 bis 5,
dadurch gekennzeichnet,
daß die Schicht gemäß II. eine Formmasse auf Basis eines Gemisches aus
a. 60 bis 80 Gew.-% eines Polyamids
und
b. 20 bis 40 Gew.-% eines Polyglutarimids
enthält.

7. Thermoplastischer Mehrschichtverbund nach den Ansprüchen 1 bis 6,
dadurch gekennzeichnet,
daß die Komponente II.b. nachstehende Grundbausteine aufweist:
i) < 100 Gew.-% 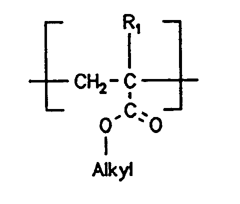
ii) < 100 Gew.-% 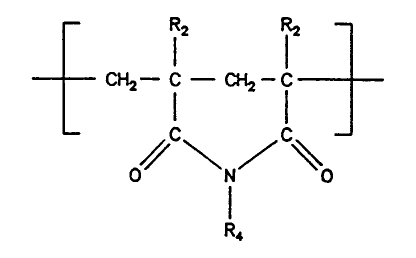
iii) < 20 Gew.-% 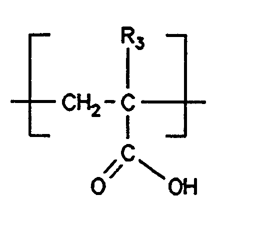
iv) 1,2 bis 20 Gew.-% 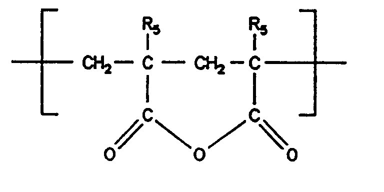
wobei Alkyl = Methyl, Ethyl, Propyl, Butyl, Hexyl
R₁ bis R₅ = -H, -(CₙH₂ₙ₊₁)
n = 1 bis 6 bedeuten
und die Substituenten gleich oder verschieden sein können.

8. Thermoplastischer Mehrschichtverbund nach den Ansprüchen 1 bis 7,
dadurch gekennzeichnet,
daß die Komponente II.b. nachstehende Grundbausteine aufweist:
i) 10 bis 60 Gew.-% 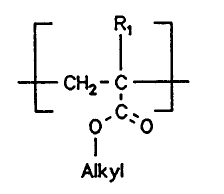
ii) 30 bis 80 Gew.-% 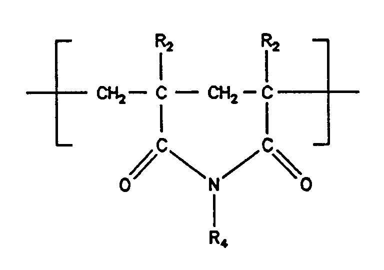
iii) 2 bis 10 Gew.-% 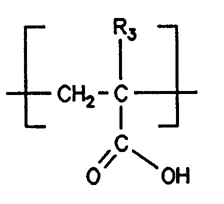
iv) 1,5 bis 12 Gew.-% 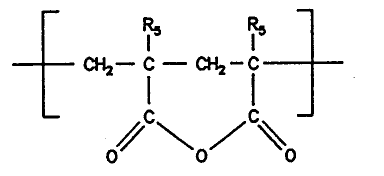
wobei Alkyl = Methyl, Ethyl, Propyl, Butyl, Hexyl
R₁ bis R₅ = -H, -(CₙH₂ₙ₊₁)
n = 1 bis 6 bedeuten
und die Substituenten gleich oder verschieden sein können.

9. Thermoplastischer Mehrschichtverbund nach den Ansprüchen 1 bis 8,
dadurch gekennzeichnet,
daß die Komponente II.b. nachstehenden Grundbaustein aufweist:
iv) 2 bis 10 Gew.-% 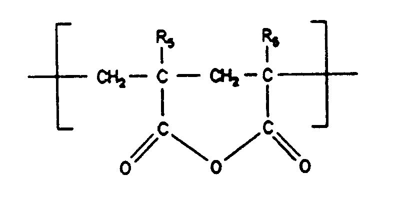
wobei R₅ = -H, -(CₙH₂ₙ₊₁) mit
n = 1 bis 6 bedeuten.

10. Thermoplastischer Mehrschichtverbund nach den Ansprüchen 7 bis 9,
dadurch gekennzeichnet,
daß Alkyl sowie R₁ bis R₅ eine Methylgruppe darstellen.

11. Thermoplastischer Mehrschichtverbund nach den Ansprüchen 1 bis 10,
dadurch gekennzeichnet,
daß eine weitere Schicht III. enthalten ist, die unmittelbar der Schicht gemäß II. benachbart ist und zwar gegenüberliegend bezogen auf die Schicht gemäß I., wobei die Schichten gemäß II. und III. kraftschlüssig miteinander verbunden sind.

12. Thermoplastischer Mehrschichtverbund nach Anspruch 11,
dadurch gekennzeichnet,
daß die Schicht gemäß III. eine Formmasse auf Basis eines Polyamids enthält.

13. Thermoplastischer Mehrschichtverbund nach den Ansprüchen 11 bis 12,
dadurch gekennzeichnet,
daß die Schicht gemäß III. eine Formmasse auf Basis eines Polyamid 12 enthält.

14. Thermoplastischer Mehrschichtverbund nach Anspruch 11,
dadurch gekennzeichnet,
daß die Schicht gemäß III. eine Formmasse auf Basis eines Polyamid/Polyglutarimid-Blends enthält.

15. Thermoplastischer Mehrschichtverbund gemäß den Ansprüchen 1 bis 14,
dadurch gekennzeichnet,
daß die Schicht gemäß I. elektrisch leitfähig eingestellt ist und einen Oberflächenwiderstand von < 10⁹ Ω aufweist.

16. Verwendung des thermoplastischen Mehrschichtverbunds nach den Ansprüchen 1 bis 15 zur Herstellung von Formteilen.

17. Verwendung des thermoplastischen Mehrschichtverbunds nach den Ansprüchen 1 bis 16 zur Herstellung von Hohlprofilen.

## Claims

1. A thermoplastic multilayer composite which comprises at least
I. a layer made of a moulding composition based on polyvinylidene fluoride, and
II. a second layer which is next to the layer according to I. and is made of a moulding composition based on a mixture of
a. polyamide
and
b. polyglutarimide,
the two layers being firmly bonded directly to one another without activation or adhesive bonding.

2. A thermoplastic multilayer composite according to claim 1, characterized in that the layer according to I. comprises a moulding composition based on a polyvinylidene fluoride having a melt flow index of < 17 g/10 min.

3. A thermoplastic multilayer composite according to either of claims 1 and 2, characterized in that the layer according to I. comprises a moulding composition based on a polyvinylidene fluoride having a melt flow index of from 2 to 13 g/10 min.

4. A thermoplastic multilayer composite according to any of claims 1 to 3, characterized in that the outer layer according to I. comprises a moulding composition based on a polyvinylidene fluoride copolymer.

5. A thermoplastic multilayer composite according to any of claims 1 to 4, characterized in that the layer according to II. comprises a moulding composition based on a mixture of
a. from 40 to 90% by weight of a polyamide
and
b. from 10 to 60% by weight of a polyglutarimide.

6. A thermoplastic multilayer composite according to any of claims 1 to 5, characterized in that the layer according to II. comprises a moulding composition based on a mixture of
a. from 60 to 80% by weight of a polyamide
and
b. from 20 to 40% by weight of a polyglutarimide.

7. A thermoplastic multilayer composite according to any of claims 1 to 6, characterized in that the component II.b. contains the following basic building blocks:
i) < 100% by weight of 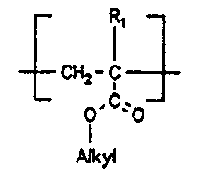
ii) < 100% by weight of 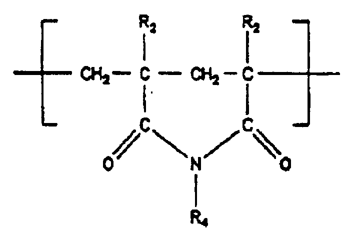
iii) < 20% by weight of 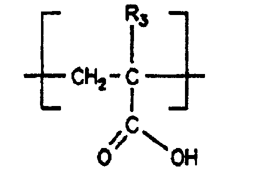
iv) from 1.2 to 20% by weight of 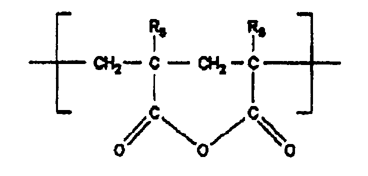
in which Alkyl = methyl, ethyl, propyl, butyl, hexyl
R₁ to R₅ = -H, -(CₙH₂ₙ₊₁)
n = from 1 to 6,
and the substituents may be identical or different.

8. A thermoplastic multilayer composite according to any of claims 1 to 7, characterized in that the component II.b. contains the following basic building blocks:
i) from 10 to 60% by weight of 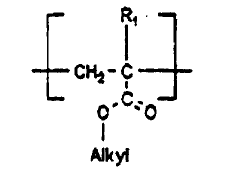
ii) from 30 to 80% by weight of 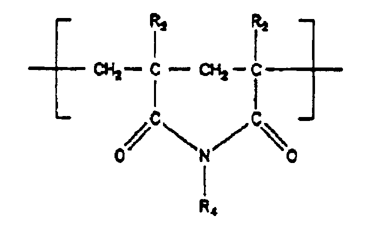
iii) from 2 to 10% by weight of 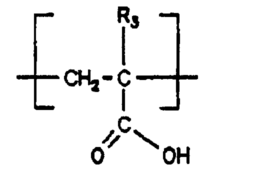
iv) from 1.5 to 12% by weight of 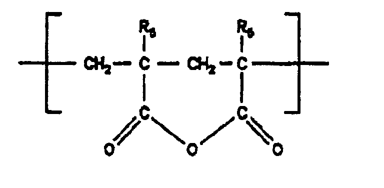
in which Alkyl = methyl, ethyl, propyl, butyl, hexyl
R₁ to R₅ = -H, -(CₙH₂ₙ₊₁)
n = from 1 to 6,
and the substituents may be identical or different.

9. A thermoplastic multilayer composite according to any of claims 1 to 8, characterized in that the component II.b. contains the following basic building block:
iv) from 2 to 10% by weight of 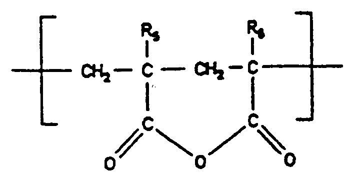
in which R₅ = H, - (CₙH₂ₙ₊₁) with
n = from 1 to 6.

10. A thermoplastic multilayer composite according to any of claims 7 to 9, characterized in that Alkyl and R₁ to R₅ are methyl groups.

11. A thermoplastic multilayer composite according to any of claims 1 to 10, characterized in that a further layer III. is incorporated, which layer is directly next to the layer according to II. on the opposite side to the layer according to I., the layers according to II. and III. being firmly bonded to one another.

12. A thermoplastic multilayer composite according to claim 11, characterized in that the layer according to III. comprises a moulding composition based on a polyamide.

13. A thermoplastic multilayer composite according to either of claims 11 and 12, characterized in that the layer according to III. comprises a moulding composition based on a polyamide 12.

14. A thermoplastic multilayer composite according to claim 11, characterized in that the layer according to III. comprises a moulding composition based on a polyamide/polyglutarimide blend.

15. A thermoplastic multilayer composite according to any of claims 1 to 14, characterized in that the layer according to I. is made electrically conductive and has a surface resistance of < 10⁹ Ω.

16. The use of the thermoplastic multilayer composite according to any of claims 1 to 15 for the production of mouldings.

17. The use of the thermoplastic multilayer composite according to any of claims 1 to 16 for the production of hollow articles.

## Revendications

1. Composition à plusieurs couches thermoplastique contenant au moins
I. Une couche de matière moulable à base de fluorure de polyvinylidène,
II. Une deuxième couche, voisine de la couche selon I, constituée d'une masse à mouler à base d'un mélange de
a. Polyamide
et
b. Polyglutarimide;
les deux couches étant étroitement reliées directement entre elles, sans activation ni collage.

2. Composition à plusieurs couches thermoplastiques selon la revendication 1,
caractérisée en ce que
la couche selon 1 contient une matière moulable à base d'un fluorure de polyvinylidène ayant un indice de fluidité inférieur à 17 g/10 minutes.

3. Composition à plusieurs couches thermoplastiques selon les revendications 1 et 2,
caractérisée en ce que
la couche selon 1 contient une matière moulable à base d'un fluorure de polyvinylidène ayant un indice de fluidité inférieur à 2 à 13 g/10 minutes.

4. Composition à plusieurs couches thermoplastiques selon les revendications 1 et 3,
caractérisée en ce que
la couche selon 1 contient une matière moulable à base d'un copolymère de fluorure de polyvinylidène.

5. Composition à plusieurs couches thermoplastiques selon les revendications 1 et 4,
caractérisée en ce que
la couche selon II contient une matière moulable à base d'un mélange de
a. 40 à 90 % en poids d'un polyamide,
et
b. 10 à 60 % en poids d'un polyglutarimide.

6. Composition à plusieurs couches thermoplastiques selon les revendications 1 et 5,
caractérisée en ce que
la couche selon II contient une matière moulable à base d'un mélange de
a. 60 à 80 % en poids d'un polyamide,
et
b. 20 à 40 % en poids d'un polyglutarimide.

7. Composition à plusieurs couches thermoplastiques selon les revendications 1 et 6,
caractérisée en ce que
le composant IIb présente les constituants de base suivants :
i) moins de 100 % en poids de 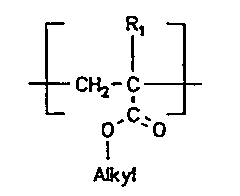
ii) moins de 100 % en poids de 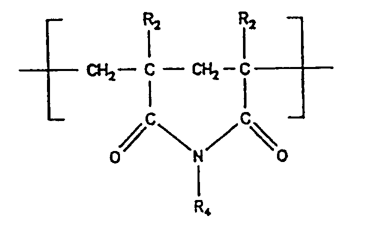
iii) moins de 20 % en poids de 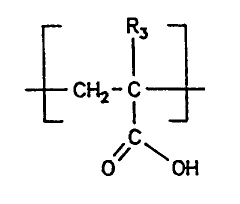
iv) de 1,2 à 20 % en poids de 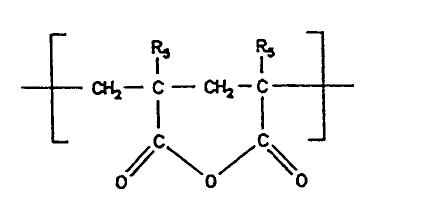
où alkyle = méthyle, éthyle, propyle, butyle, hexyle
R₁ à R₅ = -H, -(CₙH₂ₙ₊₁)
n = 1 à 6,
et les substituants pouvant être identiques ou différents.

8. Composition à plusieurs couches thermoplastiques selon les revendications 1 et 7,
caractérisée en ce que
le composant IIb présente les constituants de base suivants :
i) de 10 à 60 % en poids de 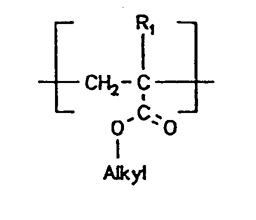
ii) de 30 à 80 % en poids de 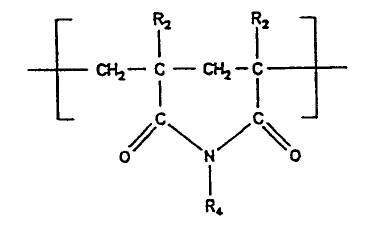
iii) de 2 à 10 % en poids de 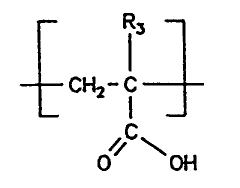
iv) de 1,5 à 12 % en poids de 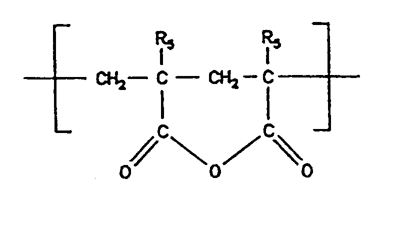
où alkyle = méthyle, éthyle, propyle, butyle, hexyle
R₁ à R₅ = -H, -(CₙH₂ₙ₊₁)
n = 1 à 6,
et les substituants pouvant être identiques ou différents.

9. Composition à plusieurs couches thermoplastiques selon les revendications 1 à 8,
caractérisée en ce que
le composant IIb présente les constituants de base suivants :
iv) de 2 à 10 % en poids de 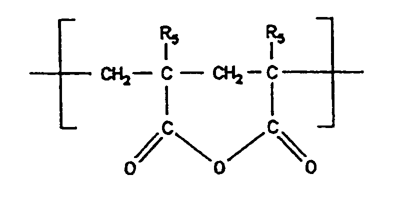
où R₅ = -H, -(CₙH₂ₙ₊₁) avec
n = 1 à 6.

10. Composition à plusieurs couches thermoplastiques selon les revendications 1 à 9,
caractérisée en ce qu'
alkyle ainsi que R₁ à R₅ représente un groupe méthyle.

11. Composition à plusieurs couches thermoplastiques selon les revendications 1 à 10,
caractérisée en ce qu'
elle contient une autre couche III, qui est immédiatement voisine de la couche selon II et se situe à l'opposé de la couche selon I, les couches selon II et III étant étroitement reliées entre elles.

12. Composition à plusieurs couches thermoplastiques selon la revendication 11,
caractérisée en ce que
la couche selon III contient une matière moulable selon un polyamide.

13. Composition à plusieurs couches thermoplastiques selon les revendications 11 à 12,
caractérisée en ce que
la couche selon III contient une matière moulable à base d'un polyamide 12.

14. Composition à plusieurs couches thermoplastiques selon la revendication 11,
caractérisée en ce que
la couche selon III contient une matière moulable à base d'un mélange polyamide/polyglutarimide.

15. Composition à plusieurs couches thermoplastiques selon les revendications 1 à 14,
caractérisée en ce que
la couche selon I est réglée de manière à être conductrice de l'électricité et présente une résistance superficielle inférieure à 10⁹ Ω.

16. Utilisation de la composition à plusieurs couches thermoplastiques selon les revendications 1 à 15 pour la fabrication de pièces moulées.

17. Utilisation de la composition à plusieurs couches thermoplastiques selon les revendications 1 à 16 pour la fabrication de profilés creux.
